# EUROPEAN PATENT APPLICATION

(11) **EP 1 050 768 A1**
(43) Date of publication of application: **08.11.2000**
(21) Application number: 99810386.5
(22) Date of filing: 05.05.1999
(51) Int. Cl.: G02B 6/42

(54) **Opto-electronic module and method of manufacturing such module**

(71) Applicant: UNIPHASE CORPORATION, San Jose California 95134 (US)
(72) Inventor: Bättig, Rainer K., 8004 Zürich (CH); Valk, Bernd, 8918 Unterlunkhofen (CH)
(74) Representative: Barth, Carl Otto

(57) **Abstract**

The invention relates to opto-electronic modules as they are extensively used in the field of optical communication, e.g. in DIL or Butterfly housings as pump lasers for Erbium-doped fiber amplifiers. Such a module (10) comprises a laser (1) mounted on a base plate (3) and a fiber holder (4) with a fiber (2) to be aligned with the laser (1). The fiber holder (4) is usually mounted to the base plate (3) by laser welds (5). To allow precise alignment before mounting, the base plate (3) has a flanged protrusion (6) positioned between the laser (1) and the fiber holder (4), against which protrusion (6) the fiber holder (4) abuts. In the embodiment shown, pairs of welds (5a and 5d; 5b and 5c) connect the fiber holder (4) to the protrusion (6). To minimize post weld shift, all welds (5a to 5c) are arranged preferably symmetrically around the fiber (2) and essentially in a single plane approximately perpendicular to the optical axis of the module (10). In a preferred embodiment, the fiber holder (4) and the protrusion (6) have on either side of the fiber (2) a similar surface structure with planar facets (4a and 6a; 4b and 6b) which, when being joined by the welds, provide a stepless surface and again minimize post weld shift. This surface structure also allows for laser welding from a direction substantially perpendicular to the base plate (3), e.g. welding within a housing through its opening. Moreover, the invention includes a method of manufacturing such a module (10).

## Description

### Field of the Invention

The invention relates to an opto-electronic module with a diode laser and an optical fiber aligned to the laser, both mounted on a base plate in said module. Such modules are used in the field of optical communication, mostly as so-called pump lasers for fiber amplifiers, e.g. Erbium-doped fiber amplifiers. In such modules, the fiber, which is often placed in a fiber holder, must be precisely aligned to the laser before fixing, usually laser welding, it relative to the base plate. This precise alignment is one of the very difficult process steps during the manufacturing of such modules.

### Background and Prior Art

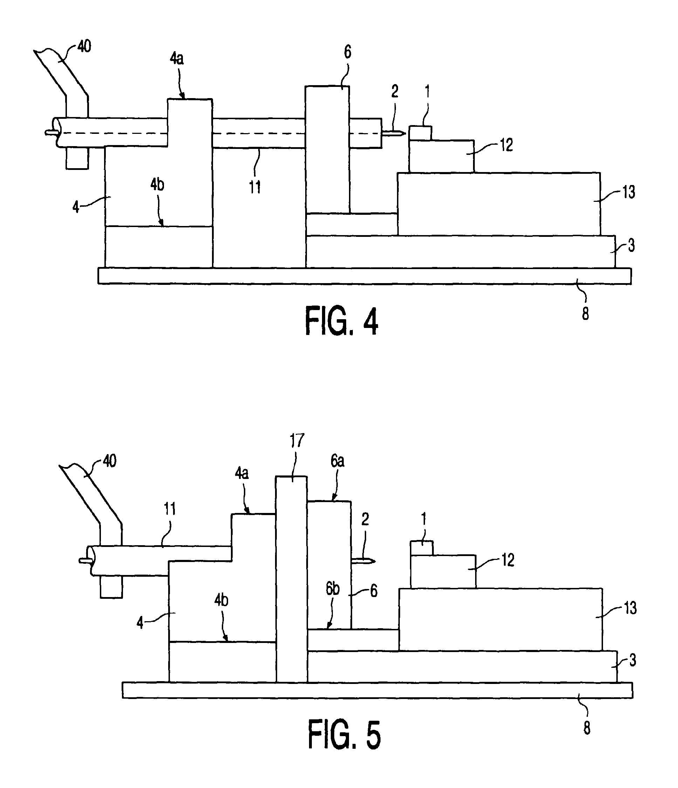

A module of the type generally described above is e.g. known from Pan et al. US Patent 5 619 609, issued 8 April 1997. Fig. 6 of the Pan patent shows a module wherein a laser is mounted on a base plate which also carries a fiber holder, the latter holding a fiber aligned with the laser. The base plate is mounted on a thermo-electric cooling (TEC) element which is positioned in a housing of the module; the fiber extends outside the housing through one of its walls. The fiber holder itself is shown in Fig. 5 of the Pan patent and comprises a clip with a slit in which a fiber tube enclosing the fiber is positioned. The fiber holder extends partly above and partly below the fiber tube; the foot of the fiber holder is attached to the base plate by laser welds. During manufacturing, the fiber tube is first mechanically adjusted in the fiber holder and then fixed to the latter by laser welds, whereby these welds are additionally used to fine-tune the alignment of the fiber relative to the laser. This fine-tuning is often called laser hammering.

Though the above-described prior art solution appears to be of reasonably straightforward design and seems to work, it still has the disadvantage that the coupling between fiber and laser may suffer from misalignment which in turn decreases the coupling efficiency and may even render it insufficient for the above mentioned use of the module as pump laser. Further, it appears that the fiber must be removed before placing the clip which would increase cycle time during manufacturing significantly. Also, to achieve a gap as small as possible, the machining tolerances must be very well controlled, which usually increases the cost of the device.

An example of an alternative design that intends to achieve a high coupling efficiency between laser and fiber by minimizing displacement during welding and allowing adjustment after welding is shown in Janssen et al. US Patent 5 570 444, issued 29 Oct. 1996. In the Janssen patent, a pair of precisely machined slide members is positioned very close to the laser to form just a small gap and then secured to the base of the module. Then, the fiber's end juxtaposed to the laser is welded to these slide members. The fiber's other end is fixed to a plastically deformable member which is then bent for maximum module performance. It is obvious that this second approach requires several parts of the module to be manufactured with high precision and that the number of manufacturing steps, in particular adjusting steps, is rather high. Particularly the required measurement of the distances between the slide members and the fiber and the certainly always necessary bending step increase manufacturing time and thus the production cost for such a module.

The present invention seeks to overcome the above described disadvantages of known designs and to show a novel design and a novel way for making such a module. The novel module provides a high coupling efficiency between laser and fiber with a rather compact and solid design, especially by providing a precise, though not complex alignment between laser and fiber. Also, a relatively inexpensive and straightforward method of manufacturing such a module is shown.

### The Invention

It is a general understanding that inaccuracies of the laser-fiber alignment in laser modules are mainly caused by post weld shifts, often abbreviated PWS, of the parts that are laser-welded. This PWS is caused by the solidification shrinkage of a weld spot during the cooling phase after welding. Based on this understanding, the present invention seeks to minimize the effect of the post weld shifts by selecting a suitable geometry of the parts to be welded and by a proper positioning of the laser welds on these parts.

In brief, the invention can be characterized on one hand as a specific design of a laser pump module, namely in essence that the base plate and the fiber holder of the module have a specific form, in particular a protrusion of the base plate positioned between the laser and the fiber holder, which form or design allows to place the welds essentially in one single plane. Further, the novel design allows the laser welds connecting the parts to be positioned symmetrically around the optical axis, and, in a further embodiment, the welds are arranged such that they can be applied at least pair-wise simultaneously and, preferably, from top of the module. The invention also concerns a method of manufacturing an opto-electronic module of the kind described. Details of the invention will be apparent from the following description of an embodiment and the claims.

With the inventive design of the module parts, in particular the base plate and the fiber holder, the following advantages are achieved. Firstly, the fiber holder and the base plate rest very close against each other at the position of the laser welds and the material distance to be bridged by the laser weld is substantially zero. This already reduces the post weld shift and its effect on the fiber laser alignment. Further, if the laser welds connecting the fiber holder to the base plate are positioned symmetrically, and perhaps even welded simultaneously, any post weld shifts will be compensated and thus any resulting effects minimized. Consequently, a module according to the invention provides for an accurate fiber-laser alignment and thus for a very high coupling efficiency with a relative modest expenditure.

As briefly mentioned above, an additional advantage of the novel module is that the laser welds can be made by power laser beams running in a direction substantially perpendicular to the base plate, thus simplifying the manufacturing process. Furthermore, a thermo-electric cooling (TEC) element, if provided, may already be used during the manufacturing process.

In a preferred embodiment of a module according to the invention, the laser welds are positioned in a symmetrical geometric pattern, whereby one pair of welds lies above the level of the fiber on either side of it and another pair of welds lies below the level of the fiber on either side of the optical fiber. The geometries of the fiber holder and the protrusion, and the positions of the laser welds are preferably such that the laser welds lie substantially on straight lines crossing at the optical axis, i.e. the fiber. Thus, the post weld shifts involved with the laser welds compensate each other as much as possible, resulting in the desired high coupling efficiency between laser and fiber.

The configuration of this latter embodiment allows to provide further laser welds, e.g. for laser hammering, either above or below the level of the fiber, if necessary. In this way, the alignment of the fiber and the laser can be further tuned in a very controlled manner, particularly in the x-y plane, which is the plane perpendicular to the fiber axis. Very good alignment can be achieved: in the x-direction (i.e. the direction parallel to the active region of the laser), values better than +/- 0.9 µm can be achieved; in the y-direction (i.e. the direction perpendicular to the active region of the laser), alignment can be better than +/- 0.3 µm, and in the z-direction, values better than +/- 2.5 µm are achievable.

In a further favorable modification, both the fiber holder and the protrusion have, preferably on either side of the fiber, substantially coplanar facets to be joined by laser welds. In a specific embodiment, substantially coplanar first facets are situated above the fiber and substantially coplanar second facets are situated below the fiber, both on the fiber holder and the protrusion. In this modification, the post weld shift is optimally compensated.

Moreover, as briefly mentioned above, the laser welds can be made with laser beams that run nearly vertical to the base plate and thus the welding can even be carried out within the housing of the module, i.e. at a rather late stage in the manufacturing process which minimizes any negative influences of the production remaining production steps. Also, simultaneous welding is possible which again reduces potential distortions and post weld shift.

A method of manufacturing an opto-electronic module with a laser and a fiber aligned to said laser is also subject of this invention. This method can be briefly described by a sequence of steps, wherein a fiber holder is abutted to a flange or flanged protrusion of a base plate, then the fiber is aligned to the laser for optimal throughput and the determined aligned position stored, then the fiber holder is retracted from the protrusion and a gauge inserted into the gap formed, the vertical and horizontal displacements of the holder are determined and the fiber positioned in the holder according to these displacements and fixed, then the gauge is removed and the holder re-positioned for optimal throughput, and, finally, the holder is fixed to the protrusion in any of the particular fashions mentioned above. Again, the geometry of the fiber holder and the position of the laser welds are preferably chosen such that the laser welds are positioned in essence symmetrically around the optical axis of the fiber.

The use of a distance gauge, temporarily placed between the fiber holder and a flange of the base plate or a protrusion of it, enables a parallel alignment of the fiber holder with respect to said flange. This allows to fix the fiber (or fiber tube) in a simple and save manner to the fiber holder after the optimal position of the fiber was determined by mere manipulation of the fiber (or fiber tube). Again, the positions of the laser welds are preferably chosen such that the welding beams can act substantially perpendicular to the base plate, e.g. from top of an open module.

Best results are obtained if some or all of the laser welds are made simultaneously. Preferably, the parts to be welded are pressed against each other before and/or during laser welding. This further reduces the detrimental influence of machining tolerances of the parts of the module. Good results are obtainable by a pressing force of e.g. 5 N. In an appropriately designed housing, further laser welds can be selectively applied to fine-tune the critical alignment of the fiber and the laser by so-called laser hammering.

A significant advantage is that the method according to present invention allows relatively large machining tolerances for the parts of the module, e.g. +/- 10 µm, which, again, lowers cost and time of manufacturing the module.

### Description of an Embodiment of the Invention

The invention will now be explained in more detail with reference to an embodiment with described modifications and the accompanying drawings, in which
- Fig. 1: shows diagrammatically an expanded view of an opto-electronic module according to the invention,
- Fig. 2: is a cross-section along the line II-II of the module of Fig. 1,
- Fig. 3: is a cross-section along the line III-III of the same module, and
- Figs. 4 and 5: show in a cross-section along the line III-III the module of Fig. 1 in consecutive stages of manufacture.

The figures are diagrammatic and not drawn to scale, in particular the dimensions in the thickness direction are exaggerated for greater clarity. Corresponding parts in the various figures have identical reference numerals, as usual.

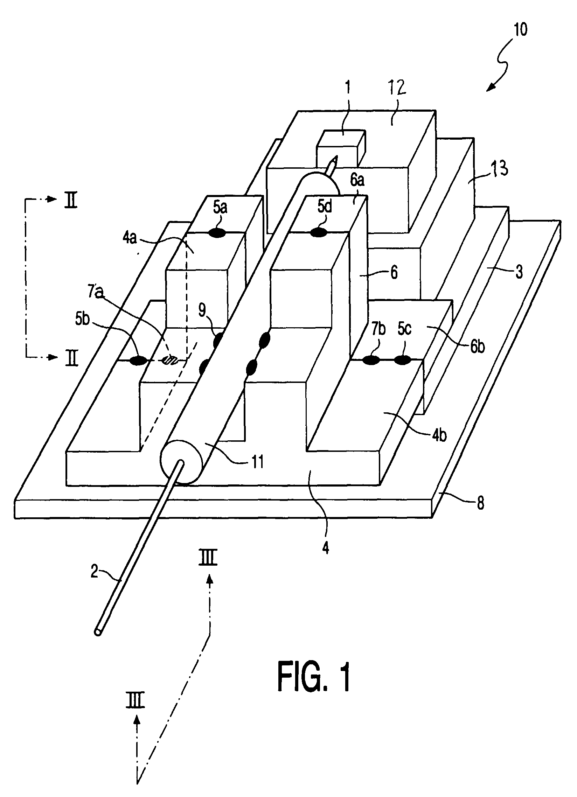

Fig. 1 shows an expanded view of an opto-electronic module 10 according to the invention. Module 10 comprises a base plate 3 on which a laser 1 is fixed. In this example, a ceramic carrier 13, e.g. of AIN (Aluminumnitride), and a ceramic heat sink 12 are present between laser 1 and base plate 3. Carrier 13 may be provided with other components like a photodiode (not shown) for monitoring laser 1 and a sensor (also not shown) for monitoring the temperature of module 1. Further provided is a fiber holder 4 holding a fiber 2 which is to be aligned to laser 1. In this example, fiber 2 is contained within a metal or metallized fiber tube 11 which is to be attached to fiber holder 4 by laser welds 9. A first or upper part 4a of fiber holder 4 extends above fiber 2 and a second (lower) part 4b lies below fiber 2. Fiber 2 is usually provided with a wedge-shaped end face; this is the face to be aligned to the usually strip-shaped active region of laser 1.

Base plate 3 is provided with a protrusion 6 positioned between laser 1 and fiber holder 4. When completed, a first pair of laser welds 5a and 5d connect the upper part 4a of fiber holder 4 to protrusion 6 on either side of fiber 2, and a second pair of laser welds 5b and 5c, also positioned on either side of fiber 2, connect the second or lower part 4b of fiber holder 4 to protrusion 6. Because all four laser welds 5a to 5d connecting fiber holder 4 to protrusion 6 are positioned symmetrically around fiber 2, i.e. partly above and partly below fiber 2, and substantially in one plane essentially perpendicular to fiber 2, the post weld shift caused by the solidification shrinkage of the weld spots during the cooling phase after welding is essentially compensated. Preferably, all four laser welds 5a-5d are set simultaneously, which further favors conservation of the alignment achieved before the welding step.

Furthermore, fiber holder 4 and protrusion 6 of base plate 3 may rest very close against each other at the position of the welds so that the material distance to be bridged by the welds 5a to 5d is substantially zero. This again reduces the post weld shift and its effect on the alignment of fiber 2 and laser 1 significantly. Thus, a module 10 according to the invention provides for a more accurate fiber laser alignment and requires a less precise manufacture of the parts as prior art designs.

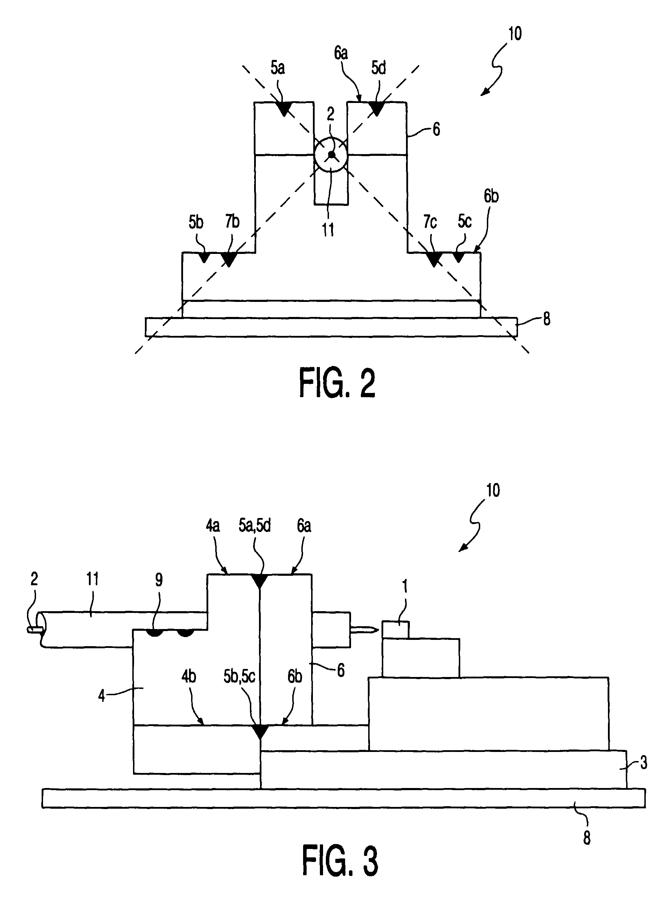

Figs. 2 and 3 are a cross-section along lines II-II and III-III, respectively, of module 10 in Fig. 1, showing the symmetrical design of the laser welds in detail. Laser weld 5a, fiber 2, and laser weld 5c lie substantially on a straight line. The same holds true for laser weld 5b, fiber 2, and laser weld 5d. The crossing point of the two straight lines is situated in the optical axis of fiber 2. This symmetrical design greatly contributes to the high alignment precision between fiber 2 and laser 1.

In this embodiment, both fiber holder 4 and protrusion 6 are provided with substantially coplanar first facets 4a and 6a, respectively, on either side of fiber 2. These first facets lie above fiber 2. Substantially coplanar second facets 4b and 6b, respectively, lie below fiber 2 and are more remote from fiber 2 than the first facets. All facets extend essentially parallel to base plate 3 and are (finally) joined by the laser welds shown.

Because of this particular layout, the laser welds can be applied to module 10 by laser beams (not shown in the figures) that run substantially perpendicular to base plate 3. Thus, coupling, adjustment, and fixing of the various parts can easily be done while module 10 is already encased in a DIL or Butterfly box.

Moreover, various means used in the manufacture of module 10, such as gripping means 40 (see Fig. 4) can be easily accommodated for. Also, assembly can be done using a TEC element 8, which is within the final casing usually below base plate 3. Thus, the manufacture of module 10 is relatively simple, but very accurate, because the whole module can be kept at a constant temperature and any heat developed during said manufacture is quickly dumped.

Most of the parts of module 10 described above, e.g. base plate 3, protrusion 6, and fiber holder 4, can be made of a material with a good conductivity like KOVAR (an alloy of Iron, Nickel and Cobalt). These parts may be further electroplated with a layer of Nickel and a layer of Gold, both of some pm thickness. In the embodiment shown, the sizes of the various parts of module 10 are as follows. Base plate 3 is a square of about 6 x 6 mm and about 1 mm thick. The first facet 6a of protrusion 6 lies about 1.7 mm above base plate 3 and the second facet 6b about 0.3 mm above. Fiber holder 4 is about 6 mm wide, about 3 mm long, and about 2.5 mm high. Width and depth of the channel containing fiber tube 11 are about 1 mm, which is also the approximate diameter of fiber tube 11. The first facets 4a and 6a are about 1 mm wide, the second facets 4b and 6b about 1.5 mm. The second facets 4b and 6b lie about 1.4 mm below the first facets 4a and 6a, respectively.

Figs. 4 and 5 show in a cross-section along line III-III module 10 of Fig. 1 in consecutive stages of manufacture by a method according to the invention.

The manufacture of the module starts (see Fig. 4) with soldering TEC element 8 into a housing (which may be a Butterfly or DIL housing not shown in the drawing). Then, base plate 3 with laser 1 and protrusion 6 is soldered onto the TEC element 8. Thereafter, fiber holder 4 is positioned on TEC element 8 at a distance of about 1.5 mm from protrusion 6. Subsequently, fiber tube 11 (Figs. 1 and 4), into which fiber 2 is soldered, is laid into fiber holder 4. The fiber's end face facing laser 1 is aligned such that the wedge shape thereof is aligned to the strip-shaped active region of the laser.

The housing is then inserted into a welding apparatus (not shown in the drawing) and the pins of the housing are connected to a control unit (not shown) so that both laser 1 and TEC element 8 may be operated. Laser 1 is biased to a preset output and TEC element 8 and a temperature sensor (not shown) in the housing are placed into an electrical control loop that defines the temperature of base plate 3 to be, say, 25°C. The fiber's far end is connected to an optical power meter to observe the amount of radiation coupled from laser 1 into fiber 2.

The welding apparatus comprises a gripper 40, shown in Figs. 4 and 5, for holding fiber tube 11, an extremely precise alignment system for positioning gripper 40 with the fiber 2 for maximum coupling efficiency, a high power laser, e.g. a pulsed Nd:YAG laser, for the envisaged laser welding and a fiber-optic delivery system, e.g. of four laser beam fibers, which deliver the power laser's radiation to the welding spots.

First, the alignment of fiber 2 with laser 1 may be visually inspected. In case of an unacceptable alignment, the carrier is removed from the welding apparatus and the fiber 2 is realigned. Subsequently, gripper 40 guides fiber 2 to the position giving a maximum coupling efficiency. Typically, this position needs to be controlled to an accuracy of less than 0.2 µm in the x- and y-directions, and one µm in the z-direction, respectively. Once maximum coupling efficiency is obtained, the corresponding x, y, and z coordinates are stored for later use.

Next, as shown in Fig. 5, a distance gauge 12 with highly parallel faces and a well defined thickness ***dz*** (here about 1 mm) is inserted into the gap between fiber holder 4 and protrusion 6. Fiber holder 4 is then pressed against distance gauge 17 and protrusion 6. This can be done by a pneumatic actuator, not shown in the drawing. Thus, a parallel alignment of the opposing faces of fiber holder 4 and protrusion 6 is obtained as well as a well defined distance between these parts. Alternatively, with a distance gauge 12 and/or fiber holder 4 made of ferromagnetic material, the pressing action can be exercised by magnetic force, e.g. by a suitable design providing one or more electromagnetic coils (not shown in the drawing) integrated into protrusion 6.

Now, using a laser interferometer (not shown in the drawing), the height difference ***dy*** between fiber holder 4 and protrusion 6 is measured, i.e. the distance between facets 4a and 6a of fiber holder 4 and protrusion 6, respectively.

Then, fiber tube 11 is moved relative to fiber holder 4 in z-direction to a position that is removed from the optimum z-position determined above by an amount equal to the thickness ***dz*** of distance gauge 17. Also, fiber tube 11 is moved in vertical direction to a position below the optimum position by an amount equal to the above determined difference or distance ***dy***. Now fiber tube 11 is welded to fiber holder 4 by four laser welds 9, two on each side of fiber tube 11.

Next, the pneumatic actuator is removed as well as distance gauge 17. Fiber holder 4 is now moved to a position with x- and y-coordinates that coincide with the above determined optimum values and with a z-coordinate that is offset by a small gap, e.g. 5 µm, from the above determined optimum value. This offset allows to freely move fiber holder 4 in x-y plane for a final fine alignment. After completion of said final alignment, fiber holder 4 is pressed against protrusion 6, a force of about 5 N being used in the embodiment here described.

Then, fiber holder 4 is laser welded to protrusion 6 by means of four laser welds 5a to 5d. Thanks mainly to the construction and geometry of module 10 according to the invention and the position of the laser welds, as discussed above, hardly any post weld shift occurs.

The above described step of temporarily using a plane-parallel distance gauge 17 during adjustment allows to close the gap between fiber holder 4 and protrusion 6 to virtually zero without any tilt of fiber 2. The other above described step of measuring the height difference ***dy*** between the coplanar facets 4a, 6a and 4b, 6b of fiber holder 4 and protrusion 6, respectively, allows to achieve a virtually stepless surface between these two parts at the optimum coupling position. Since it is relatively easy to manufacture parts like base plate 3 with protrusion 6 and fiber holder 4 with tolerances of +/- 10µm, the steps still remaining after the alignment process will be minimal and will have no effect on post weld shift. Thus, both above steps minimize post weld shift to an amount that cannot be achieved with prior art designs.

Subsequently, the coupling efficiency may be measured again and compared with the value determined after the above-described previous (or first) alignment. For that, gripper 50 is released from fiber tube 11 so that any stresses in the latter are relieved.

Later, e.g. if the difference between the values of the first and second measurement exceeds a given threshold, gripper 50 may be used again. To finally correct any remaining misalignment between laser 1 and fiber 2, gripper 50 may re-engage fiber tube 11 and carefully bend it to find the direction of any remaining post weld shift. During this bending, the coupling efficiency is monitored and the direction of increasing efficiency determined. If this bending results in finding that fiber 1 was slightly out of the optimum position, the remaining post weld shift may be compensated and the optimum position with maximal coupling efficiency restored by so-called laser hammering, i.e. applying asymmetric welds. Assuming that fiber 1 was slightly above the optimum position, additional laser welds 7a and 7b may be applied as shown in Fig. 3. This is a further aspect of the invention.

Finally, gripper 50 is reopened and module 10 is removed from the welding apparatus. After closing the casing, e.g. the Butterfly or DIL box, an opto-electronic component comprising a module 10 according to the invention is ready for use.

The invention is in no way limited to the embodiments described, since many modifications and variations are possible to those skilled in the art without departing from the spirit and scope of the invention. Thus, other materials and different dimensions from those mentioned in the embodiments may be used. It is noted in particular that, though the module according to the invention preferably comprises a TEC element, the invention is not limited to modules or components including such an element. Also, more and/or other electronic or opto-electronic components may be included in the module.

Furthermore, it is specifically noted that the protrusion and the base plate need not form one single piece. A module according the invention may also be built by fixing together separate parts forming the base plate and protrusion. Also, other mechanical elements may be integrated with the base plate, like a carrier or a heatsink. Similarly, the fiber holder, which in the embodiment described is a single part, may consist of two or more parts.

Also, the geometries of the fiber holder and protrusion or base plate may be modified such that an uneven number of laser welds can be positioned substantially symmetrically around the fiber and essentially within a single plane running preferably perpendicular to the fiber. A rather straightforward design can be obtained by positioning three laser welds at the corners of a triangle with equal sides, the position of the fiber being in the central point of the triangle. The first laser weld may lie precisely above the fiber and the second and third welds at the lower corner points of the triangle below the fiber. In this case, both the fiber holder and the protrusion may be provided with a hole through which the fiber (or a fiber tube comprising the fiber) can be aligned to the laser.

## Claims

1. An opto-electronic module (10) with a laser (1) and an optical fiber (2) aligned to said laser (1), said module (10) including a base plate (3) on which said laser (1) and a fiber holder (4) are mounted, preferably by laser welds (5a to 5d),
characterized in that
- said base plate (3) has a protrusion (6) with a flange extending from said base plate (3),
- said fiber holder (4) abuts against said flange of said protrusion (6), and
- said welds (5a to 5d) are arranged essentially in one single plane being defined by the flange of said protrusion (6).

2. The opto-electronic module of claim 1,
wherein
- the welds (5a to 5d) are arranged essentially symmetrically with respect to the optical axis of the fiber (2) and/or the laser (1).

3. The opto-electronic module of claim 1 or 2, wherein
- first welds (5a and 5d), each weld being preferably located on either side of the fiber (2), connect a first part (4a) extending from the fiber holder (4) to the flanged protrusion (6), and second welds (5b and 5c), each weld being preferably located on either side of said fiber (2), connect the second part (4b) extending from said fiber holder (4) to said flanged protrusion (6), whereby said welds are preferably at least pair-wise applied simultaneously.

4. The opto-electronic module of at least one of the preceding claims, wherein
- the geometry of the fiber holder (4) and the position of the welds (5a to 5d) are such that the welds are positioned substantially symmetrically around the fiber's optical axis (2) and
- said welds (5a to 5d) are positioned within a plane extending substantially perpendicular to said optical axis.

5. The opto-electronic module of at least one of the preceding claims, wherein
- the fiber holder (4) and the protrusion (6) have substantially coplanar facets (4a, 4b, 6a, 6b) preferably extending essentially parallel to the base plate (3), on which facets the welds (5a to 5d) are positioned.

6. The opto-electronic module of at least one of the preceding claims, wherein
- the fiber holder (4) and the protrusion (6) have substantially coplanar first facets (4a, 6a) above the fiber (2) on either side of the latter and substantially coplanar second facets (4b, 6b) below said fiber (2) and more distant from the latter than said first facets (4a, 6a),
- said first and second facets (4a, 6a; 4b, 6b) are extending essentially parallel to the base plate (3), and
- the welds (5a to 5d) are positioned both on said first (4a, 6a) and said second facets (4b, 6b).

7. The opto-electronic module of at least one of the preceding claims, wherein
- additional welds (7a, 7b) are provided on the first part (4a) and/or the second part (4b) of the fiber holder (4) to compensate for remaining misalignment between the laser (1) and the fiber (2).

8. The opto-electronic module of at least one of the preceding claims, wherein
- the module includes a housing accommodating the base plate (3), the laser (1), and the fiber holder (4) with the fiber (2), said housing having at least one opening through which the welds (5a to 5d; 7a, 7a) may be applied.

9. A method of manufacturing an opto-electronic module (10), said module including a laser (1), an optical fiber (2) in a fiber holder (4) to be aligned to said laser (1), and a base plate (3) on which these parts are mounted,
characterized by the following steps:
- said fiber holder (4) is brought close to a protrusion (6) having a flange essentially perpendicular to the optical axis of and being fixed relative to said laser (1),
- said fiber (2) is aligned to said laser (1) for optimal throughput and the determined aligned position of said fiber (2) stored,
- said fiber holder (4) is withdrawn from said protrusion (6) to form a gap and a gauge (12) with a defined thickness (*dz*) inserted into said gap,
- the vertical displacement (*dy*) between said protrusion (6) and said fiber holder (4) is determined and stored,
- said fiber (2) is positioned within said fiber holder (4) according to said vertical displacement (*dy*) and said defined thickness (*dz*) and fixed to it, preferably by a plurality of welds (9),
- said gauge (12) is removed and said fiber holder (4) re-positioned for optimal throughput, and
- said fiber holder (4) is fixed to said protrusion (6), preferably by one or more pairs of welds (5a, 5d or 5b, 5c) positioned symmetrically with regard to said fiber (2).

10. The method of manufacturing according to Claim 9, wherein
- any parts (4 and 6) to be welded together are pressed against each other during the welding steps.

11. The method of manufacturing according to any of the Claims 9 or 10, wherein
- at least two first welds (5a, 5d) are provided symmetrically on either side of the fiber (2) for mounting a first part (4a) of the fiber holder (4) to the protrusion (6), and
- at least two second welds (5b, 5c) are positioned symmetrically on either side of said fiber (2) for mounting a second part (4b) of said fiber holder (4) to said protrusion (6).

12. The method of manufacturing according to one or more of the Claims 9 to 11, wherein
- the geometries of the fiber holder (4) and the protrusion (6) enable a substantially symmetrical position of the welds (5a to 5d) around the optical axis of the fiber (2) and,
- the welding can be executed from one single direction with regard to the module (10), preferably from top of said module (10).

13. The method of manufacturing according to one or more of the Claims 9 to 12, wherein
- the welds (5a and 5d; 5b and 5c) are applied substantially simultaneously in symmetrical pairs or simultaneously altogether.

14. The method of manufacturing according to one or more of the Claims 9 to 13, wherein
- further welds (7a, 7b) are provided to correct any remaining misalignment, in particular post weld shift.

15. The method of manufacturing according to one or more of the Claims 9 to 14, wherein
- any welding is executed by at least one power laser from a direction essentially perpendicular to the base plate (3).
